# EUROPÄISCHE PATENTANMELDUNG

(11) **EP 4 318 086 A1**
(43) Veröffentlichungstag der Anmeldung: **07.02.2024**
(21) Anmeldenummer: 23187240.9
(22) Anmeldetag: 24.07.2023
(51) Int. Cl.: G02C 5/00, G02C 5/22

(54) **BRILLENSCHARNIER FÜR BRILLE SOWIE BRILLE MIT BRILLENSCHARNIER**

(30) Priorität: 04.08.2022 DE 102022119661
(71) Anmelder: Ruckaberle, Tim, 71034 Böblingen (DE); Edelweyes GmbH, 8224 Kaindorf bei Hartberg (AT)
(72) Erfinder: Ruckaberle, Tim, 71034 Böblingen (DE); Schnötzinger, Robert, 8224 Kaindorf (AT); Polhammer, Wolfgang, 8200 Gleisdorf (AT)
(74) Vertreter: 2s-ip Schramm Schneider Bertagnoll Patent- und Rechtsanwälte Part mbB

(57) **Zusammenfassung**

Bereit gestellt wird durch die Erfindung ein Brillenscharnier zum schwenkbaren Befestigen eines Brillenbügels an einem Brillenrahmen einer Brille, wobei das Brillenscharnier ein erstes Scharnierelement, ein zweites Scharnierelement und ein dritte Scharnierelement umfasst, wobei in dem ersten (mittleren) Scharnierelement zumindest zwei federnde oder federnd gelagerte Arretiermittel angeordnet sind, wobei das eine Arretiermittel durch eine Federkraft in einer Bewegungsrichtung entlang der Bewegungsachse gegen das zweite Scharnierelement gedrückt wird und wobei das andere Arretiermittel durch eine Federkraft in einer Bewegungsrichtung entlang der Bewegungsachse gegen das dritte Scharnierelement gedrückt wird.

## Beschreibung

### Gebiet der Erfindung

Die Erfindung betrifft ein Brillenscharnier zum schwenkbaren Befestigen eines Brillenbügels an einem Brillenrahmen einer Brille sowie eine Brille mit zwei erfindungsgemäßen Brillenscharnieren, mit denen zwei Brillenbügel schwenkbar an einem Brillenrahmen der Brille angeordnet sind.

### Hintergrund der Erfindung

Es ist bekannt, Brillenbügel schwenkbar an einem Brillenrahmen einer Brille anzuordnen, um bei Nichtgebrauch der Brille die Brillenbügel an den Brillenrahmen zu klappen.

Um eine Brille in zwei unterschiedlichen Farben oder unterschiedlichen Materialien bereitzustellen, ist es notwendig, zwei verschiedene Brillen mit jeweils einer anderen Farbe oder einem anderen Material bereitzustellen. So kann beispielsweise in Abhängigkeit des Outfits des Trägers die farblich passende Brille getragen werden. Nachteilig hierbei ist allerdings, dass für zwei unterschiedliche Farben bzw. Materialien der Brille tatsächlich zwei verschiedene Brillen bereitgestellt werden müssen.

Um diesen Nachteil zumindest teilweise zu umgehen, ist es bekannt, Brillen bereitzustellen, die sogenannte Wechselbügel aufweisen. Bei diesen Brillen können die Brillenbügel abgenommen und durch andere Brillenbügel ersetzt werden. Ein Brillenrahmen kann dadurch mit unterschiedlich farbigen Brillenbügeln kombiniert werden. Allerdings müssen hier mindestens zwei Brillenbügelpaare bereitgestellt werden.

Eine Art Wechselbrille ist aus der DE 10 2016 101 370 A1 bekannt. Die Brillenbügel werden hier über ein spezielles Bügelgelenk an den Brillenrahmen angelenkt. Das Bügelgelenk ermöglicht es, einen Brillenbügel über einen Bereich von etwa 360° zu schwenken. Nachteilig hierbei ist allerdings, dass eine Arretierung des Brillenbügels in einer bestimmten Stellung relativ zum Brillenrahmen nicht sicher gewährleistet werden kann.

Aus der DE 20 2007 019 108 U1 und der KR 101917985 B1 sind jeweils dreiteilige Brillenscharniere bekannt, wobei an einem mittleren Scharnierelement die beiden anderen Scharnierelemente angelenkt sind. In den beiden anderen Scharnierelementen sind federnd gelagerte Arretiermittel angeordnet, die jeweils gegen das mittlere Scharnierelement gedrückt werden.

Aus der US 5,751,393 A ist ein dreiteiliges Brillenscharnier bekannt, wobei an einem mittleren Scharnierelement die beiden anderen Scharnierelemente angelenkt sind. Das mittlere Scharnierelement weist ein beidseitig offenes Durchgangsloch auf, in dem zwei Arretiermittel und eine Feder, die auf die beiden Arretiermittel wirkt, angeordnet sind. Nachteilig hierbei ist, dass die beiden Arretiermittel nur auf einer gemeinsamen Bewegungsachse bewegt werden können. Ein Beaufschlagen der beiden Arretiermittel mit unterschiedlichen Federkräften ist ebenfalls nicht möglich, sodass beide Arretiermittel mit der gleichen Federkraft auf das jeweilige Scharnierelement gedrückt werden.

Aus der DE 600 29 401 T2 ist en zweiteiliges Brillenscharnier bekannt, wobei in einem der beiden Scharnierelemente ein federnd gelagertes Arretiermittel angeordnet ist.

### Aufgabe der Erfindung

Aufgabe der vorliegenden Erfindung ist es daher, Lösungen bereitzustellen, die die aus dem Stand der Technik bekannten Nachteile zumindest teilweise vermeiden und mit denen eine Brille bereitgestellt werden kann, dessen Brillenbügel sicher am Brillenrahmen arretiert werden können.

### Erfindungsgemäße Lösung

Erfindungsgemäß wird diese Aufgabe mit einem Brillenscharnier und einer Brille nach den unabhängigen Ansprüchen gelöst. Vorteilhafte Weiterbildungen und Ausgestaltungen der Erfindung sind in den jeweiligen abhängigen Ansprüchen angegeben.

Bereitgestellt wird demnach ein Brillenscharnier zum schwenkbaren Befestigen eines Brillenbügels an einem Brillenrahmen einer Brille, wobei das Brillenscharnier
- ein erstes Scharnierelement,
- ein zweites Scharnierelement, und
- ein drittes Scharnierelement
umfasst, wobei
- das erste Scharnierelement schwenkbar an dem zweiten Scharnierelement angelenkt ist,
- das erste Scharnierelement zumindest ein erstes federndes oder federnd gelagertes Arretiermittel aufweist, wobei das erste Arretiermittel entlang einer Bewegungsachse beweglich in dem ersten Scharnierelement angeordnet ist,
- das erste Arretiermittel durch eine Federkraft in einer Bewegungsrichtung entlang der Bewegungsachse gegen das zweite Scharnierelement gedrückt wird,
- das dritte Scharnierelement schwenkbar an dem ersten Scharnierelement angelenkt ist,
- das erste Scharnierelement zumindest ein zweites federndes oder federnd gelagertes Arretiermittel aufweist, wobei das zweite Arretiermittel entlang einer Bewegungsachse beweglich in dem ersten Scharnierelement angeordnet ist,
- das zweite Arretiermittel durch eine Federkraft in einer Bewegungsrichtung entlang der Bewegungsachse gegen das dritte Scharnierelement gedrückt wird, und
- das zumindest eine erste Arretiermittel und das zumindest eine zweite Arretiermittel jeweils in einer Sackbohrung am ersten Scharnierelement angeordnet sind (das bedeutet, dass jedes Arretiermittel in einer eigen dafür vorgesehenen Sackbohrung angeordnet ist).

Durch das bewegliche Anordnen des ersten Arretiermittels in dem ersten Scharnierelement, wobei das Arretiermittel entlang einer Bewegungsachse, d.h. geradlinig bewegbar ist, und die Federkraft, mit der das Arretiermittel entlang der Bewegungsachse gegen das zweite Scharnierelement gedrückt wird, wird ein sicheres Arretieren des Brillenbügels relativ zum Brillenrahmen gewährleistet. Entsprechendes gilt auch für das zweite Arretiermittel, das mittels der Federkraft gegen das dritte Scharnierelement gedrückt wird.

Die drei Scharnierelemente sind also jeweils paarweise aneinander angelenkt, d.h. Scharnierelement ↔ Scharnierelement ↔ Scharnierelemente, wobei "↔" angelenkt bedeutet. Bei einem dreiteiligen Brillenscharnier bildet ein Scharnierelement ein "mittleres" Scharnierelement. Die beiden Sackbohrungen sind also in dem mittleren Scharnierelement vorgesehen. Da in dem mittleren Scharnierelement zwei voneinander getrennte Sackbohrungen vorgesehen sind, in denen jeweils ein federndes bzw. federn gelagertes Arretiermittel angeordnet ist, können beiden Arretiermittel mit verschiedenen Federkräften beaufschlagt werden. Ferner können beiden Sackbohrungen so relativ zueinander angeordnet werden, dass die Bewegungsachsen in einem gewissen Winkel zueinander verlaufen.

In einer Ausgestaltung der Erfindung kann es vorteilhaft sein, wenn jedes Scharnierelement relativ zu dem jeweils angelenkten Scharnierelement um einen Bereich von mindestens 160°, vorzugsweise mindestens 180° schwenkbar ist. Beispielsweise ist das an dem ersten Scharnierelement angelenkte zweite (bzw. dritte) Scharnierelement um einen Winkel von mindestens 160° relativ zum ersten Scharnierelement schwenkbar.

Bei einem dreiteiligen Brillenscharnier (mit einem ersten, einem zweiten und einem dritten Scharnierelement) kann so ein Brillenbügel um mindestens 320°, vorzugsweise um 360° relativ zum Brillenrahmen geschwenkt werden - ein Brillenbügel kann zu einer ersten Seite des Brillenrahmens und zu einer zweiten Seite des Brillenrahmens geschwenkt und geklappt werden, sodass entweder die eine Seite des Brillenrahmens oder die andere Seite des Brillenrahmens als Front genutzt werden kann.

Durch die Anordnung der Arretiermittel in jeweils einem Sackloch kann eine sichere Anordnung des jeweiligen Arretiermittels gewährleistet werden. Insbesondere kann so eine geradlinige Bewegung des jeweiligen Arretiermittels im Scharnierelement gewährleistet werden. Bei entsprechender Anpassung der Geometrie der Sackbohrung an die Geometrie des Arretiermittels kann ein Verschmutzen des Arretiermittels, was zu einer funktionalen Beeinträchtigung führen kann, weitgehend vermieden werden.

Vorteilhaft kann es sein, wenn das zumindest eine erste Arretiermittel und das zumindest eine zweite Arretiermittel jeweils einen Kolben und ein mit dem jeweiligen Kolben zusammenwirkendes Federelement umfassen. Das Federelement kann eine Druckfeder, bevorzugt eine Schraubendruckfeder umfassen. Das Federelement kann angepasst sein, den jeweiligen Kolben aus der jeweiligen Sackbohrung in der Bewegungsrichtung entlang der Bewegungsachse herauszudrücken.

In einer Ausgestaltung der Erfindung kann das Federelement des zumindest einen ersten Arretiermittels eine andere Federkraft aufweisen als das Federelement des zumindest einen zweiten Arretiermittels. Vorteilhaft ist es hierbei, wenn das Federelement jenes Arretiermittels, das gegen das dem Brillenbügel zugeordneten Scharnierelement drückt, eine größere Federkraft aufweist als das Federelement jenes Arretiermittels, das gegen das dem Brillenrahmen zugeordneten Scharnierelement drückt. Hierdurch kann eine optimale Funktionalität des dreiteiligen Brillenscharniers gewährleistet werden, d.h. es wird gewährleistet, dass der Brillenbügel von einer Seite des Brillenrahmens zur anderen Seite des Brillenrahmens geklappt bzw. geschwenkt werden kann, ohne dass der Brillenbügel bei diesem Schwenkvorgang relativ zum mittleren Scharnierelement geschwenkt wird.

Alternativ kann die Federkraft der Federelemente identisch bzw. im Wesentlichen gleich groß sein.

In einer Ausgestaltung der Erfindung können jeweils zwei Scharnierelemente über eine Scharniergabel-Scharniersteg-Verbindung schwenkbar zueinander angelenkt sein, wobei eines der beiden Scharnierelemente die Scharniergabel und das andere der beiden Scharnierelemente den Scharniersteg aufweisen.

Das zweite Scharnierelement kann mit dem Brillenbügel und/oder das dritte Scharnierelement kann mit einem Brillenrahmen koppelbar, insbesondere lösbar koppelbar sein.

Vorteilhaft kann es sein, wenn die Sackbohrung, in dem das zumindest eine erste Arretiermittel angeordnet ist, und die Sackbohrung, in dem das zumindest eine zweite Arretiermittel angeordnet ist, in einem vorbestimmten Winkel zueinander in dem ersten Scharnierelement verlaufen, wenn also die Längsachsen der beiden Sackbohrungen nicht parallel zueinander verlaufen, sondern in einem bestimmten Winkel zueinander verlaufen.

In einer Ausgestaltung der Erfindung kann es vorteilhaft sein, wenn das zweite Scharnierelement einteilig mit dem Brillenbügel und/oder das dritte Scharnierelement einteilig mit dem Brillenrahmen ausgestaltet ist. "Einteilig" bedeutet, dass das Scharnierelement und der Brillenbügel (bzw. der Brillenrahmen) einstückig ausgestaltet sind, d.h. das Scharnierelement ein integraler Teil des Brillenbügels (bzw. Brillenrahmens) ist. Das kann insbesondere dann vorteilhaft sein, wenn der Brillenrahmen und/oder der Brillenbügel in einem 3D-Druckverfahren hergestellt werden. Selbstverständlich sind auch bei der vorstehend genannten einteiligen Ausgestaltung die Arretiermittel entsprechend bewegbar in dem jeweiligen Scharnierelement angeordnet.

Bereit gestellt wird durch die Erfindung ferner eine Brille, die einen Brillenrahmen, zwei Brillenbügel und zwei erfindungsgemäße Brillenscharniere umfasst, wobei jeweils ein Brillenbügel über ein erfindungsgemäßes Brillenscharnier schwenkbar an dem Brillenrahmen angeordnet, d.h. angelenkt ist.

Vorteilhaft ist es hierbei, wenn jeder Brillenbügel über das jeweilige Brillenscharnier über einen Bereich von mindestens 320°, vorzugsweise von mindestens 360° relativ zum Brillenrahmen schwenkbar ist.

Der Brillenrahmen, die Brillenbügel und/oder die Brillenscharniere können in einem 3D-Druckverfahren hergestellt sein bzw. hergestellt werden. Alternativ können der Brillenrahmen, die Brillenbügel und/oder die Brillenscharniere auch in einem spanabhebenden Verfahren oder in einem Spritzgussverfahren hergestellt sein bzw. hergestellt werden.

Mit dem erfindungsgemäßen dreiteiligen Brillenscharnier bzw. mit der erfindungsgemäßen Brille wird eine sogenannte "Wechselbrille" bereitgestellt, die zwei Brillen in einer Brille vereint. Durch Schwenken der Brillenbügel relativ zum Brillenrahmen kann die Brilleninnenseite zur Brillenaußenseite umfunktioniert werden. Aufgrund der erfindungsgemäßen Ausgestaltung des Brillenscharniers, das zwischen dem Brillenrahmen und dem Brillenbügel angeordnet ist, kann der Brillenbügel um bis zu 360° relativ zum Brillenrahmen verschwenkt werden, wobei 180° der Schwenkbewegung über das dem Brillenrahmen zugeordnete Scharnierelement und 180° der Schwenkbewegung über das dem Brillenbügel zugeordnete Scharnierelement bewerkstelligt werden. Dadurch wird der Brillenbügel von einer Seite der Brille zur anderen Seite der Brille bzw. des Brillenrahmens verschwenkt.

### Kurzbeschreibung der Figuren

Einzelheiten und Merkmale, insbesondere vorteilhafte Ausgestaltungen und Weiterbildungen der Erfindung ergeben sich aus der nachfolgenden Beschreibung in Verbindung mit der Zeichnung. Es zeigt:
- Fig. 1: in Abbildung (a) einen Ausschnitt einer erfindungsgemäßen Brille (Teil eines Brillenrahmens mit einem daran angeordneten Brillenbügel), und in Abbildung (b) eine vergrößerte Ansicht des in Abbildung (a) gezeigten Brillenscharniers;
- Fig. 2: eine Ausgestaltung eines ersten Scharnierelements (Scharniergehäuse) eines erfindungsgemäßen Brillenscharniers, wobei in Abbildung (a) eine perspektivische Ansicht des Scharniergehäuses, in Abbildung (b) eine Seitenansicht des Scharniergehäuses mit mehreren Ausbrüchen, und Abbildung (c) eine Draufsicht des Scharniergehäuses gezeigt sind;
- Fig. 3: eine alternative Ausgestaltung eines ersten Scharnierelements (Scharniergehäuse) eines erfindungsgemäßen Brillenscharniers in einer Seitenansicht mit mehreren Ausbrüchen (Abbildung (c)) und ein Arretiermittel (Abbildung (a)) mit einem dem Arretiermittel zugeordneten Federelement (Abbildung (b));
- Fig. 4: ein Gelenkteil (zweites bzw. drittes Scharnierelement) eines erfindungsgemäßen Brillenscharniers in einer Ansicht von oben (Abbildung (a)) und einer Seitenansicht mit einem Ausbruch (Abbildung (b));
- Fig. 5: in Abbildung (a) das in Fig. 2 gezeigte Scharniergehäuse (erstes Scharnierelement) mit daran angelenkten Gelenkteilen (zweites und drittes Scharnierelement) in einem Längsschnitt, und die Abbildungen (b) und (c) jeweils einen Querschnitt eines Teils des Scharniergehäuses mit einem daran angelenkten Gelenkteil;
- Fig. 6: in den Abbildungen (a), (b), (c) und (d) vier alternative Ausgestaltungen eines Brillenscharniers; und
- Fig. 7: eine weitere Ausgestaltung einer erfindungsgemäßen Brille.

### Detaillierte Beschreibung der Erfindung

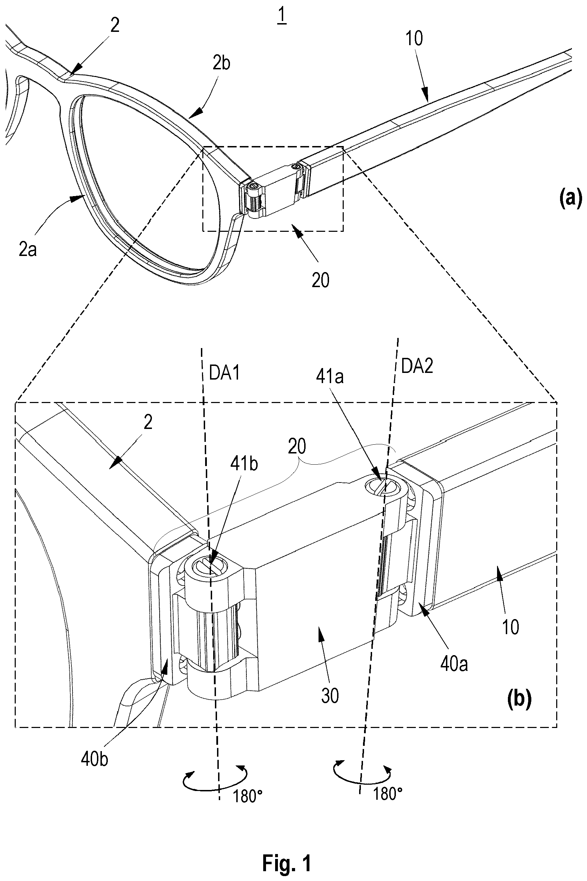

**Fig. 1** zeigt in Abbildung (a) einen Ausschnitt einer erfindungsgemäßen Brille 1 und in Abbildung (b) eine vergrößerte Ansicht des in Abbildung (a) gezeigten Brillenscharniers 20. Die Brille 1 umfasst einen Brillenrahmen 2 und zwei Brillenbügel 10, wobei die beiden Brillenbügel 10 jeweils über ein erfindungsgemäßes Brillenscharnier 20 schwenkbar an den Brillenrahmen 2 angelenkt sind.

Bei der in Fig. 1 gezeigten erfindungsgemäßen Brille 1 können die Brillenbügel 10 von einer Seite des Brillenrahmens 2 zur anderen Seite des Brillenrahmens 2 geschwenkt werden, sodass die Innenseite 2b des Brillenrahmens 2 zur Außenseite umfunktioniert werden kann. Die Außenseite 2a des Brillenrahmens 2 wird dann zur Innenseite des Brillenrahmens.

Weisen beide Oberflächen 2a, 2b des Brillenrahmens 2 jeweils eine unterschiedliche Farbe und/oder ein unterschiedliches Material auf, dann wird durch die erfindungsgemäße Brille 1 eine sogenannte Wechselbrille bereitgestellt, dessen Farbe und/oder Material durch Umschwenken der Brillenbügel 10 zur anderen Seite des Brillenrahmens 2 verändert werden kann.

Das Brillenscharnier 20 ist hier dreiteilig ausgestaltet und umfasst ein erstes Scharnierelement 30, das nachfolgend auch Scharniergehäuse 30 genannt wird, ein zweites Scharnierelement 40a und ein drittes Scharnierelement 40b. Das zweite Scharnierelement 40a und das dritte Scharnierelement 40b werden nachfolgend auch als Gelenkteil 40a bzw. Gelenkteil 40b bezeichnet.

Bei der in Fig. 1 gezeigten Ausgestaltung des erfindungsgemäßen Brillenscharniers 20 ist das erste Gelenkteil 40a schwenkbar an einer Stirnseite des Scharniergehäuses 30 angeordnet. Das zweite Gelenkteil 40b ist schwenkbar an der gegenüberliegenden Stirnseite des Scharniergehäuses 30 angeordnet. Das Scharniergehäuse 30 ist hier an den beiden Stirnseiten als Scharniergabel ausgestaltet, in die jeweils ein Scharnierstieg des entsprechenden Gelenkteils eingreift. Über Befestigungsmittel 41a, 41b, die als Schrauben oder Bolzen ausgestaltet sein können, sind die Gelenkteile 40a, 40b an der jeweiligen Stirnseite des Scharniergehäuses 30 bzw. an der jeweiligen Scharniergabel schwenkbar befestigt.

Die Befestigungsmittel 41a, 41b bilden hierbei jeweils eine Schwenkachse DA1 und DA2.

Das zweite Gelenkteil 40b ist an dem Brillenrahmen 2 angeordnet, sodass das Scharniergehäuse 30 um einen Bereich von mindestens 160°, vorzugweise um einen Bereich von etwa 180° um die Schwenkachse DA1 relativ zum Brillenrahmen 2 geschwenkt werden kann. Das Scharniergehäuse 30 kann so entweder zur einen Seite des Brillenrahmens oder zur anderen Seite des Brillenrahmens ausgerichtet werden.

Das erste Gelenkteil 40a ist an dem Brillenbügel 10 angeordnet, sodass das erste Gelenkteil 40a um einen Bereich von mindestens 160°, vorzugweise um einen Bereich von etwa 180° um die Schwenkachse DA2 relativ zum Scharniergehäuse 30 geschwenkt werden kann. Der Brillenbügel 10 kann so auf beiden Seiten des Brillenrahmens 2 (je nachdem zu welcher Seite hin des Brillenrahmens das Scharniergehäuse ausgerichtet ist) nach innen, d.h. zum Brillenrahmen hin geschwenkt werden (etwa, wenn die Brille nicht gebraucht wird).

Die beiden Schwenkachsen DA1 und DA2 ermöglichen es also, den Brillenbügel 10 um einen Bereich von mindestens 320°, vorzugsweise von etwa 360° relativ zum Brillenrahmen zu schwenken.

Das Scharniergehäuse 30 und die beiden Gelenkteile 40a, 40b können aus einem Kunststoff oder einem Metall gefertigt sein.

Das Gelenkteil 40a kann einteilig mit dem Brillenbügel 10 gefertigt sein. In Fig. 1 ist allerdings eine zweiteilige Variante von Brillenbügel 10 und Gelenkteil 40a gezeigt, bei der das Gelenkteil 40a über Befestigungsmittel an dem Brillenbügel befestigt ist.

Das Gelenkteil 40b kann einteilig mit dem Brillenrahmen 2 gefertigt sein. In Fig. 1 ist allerdings eine zweiteilige Variante von Brillenrahmen 2 und Gelenkteil 40b gezeigt, bei der das Gelenkteil 40b über Befestigungsmittel an dem Brillenrahmen befestigt ist.

In einer Ausgestaltung der Erfindung können die beiden Gelenkteile 40a, 40b identisch ausgestaltet sein, d.h. ein Gelenkteil kann sowohl brillenrahmenseitig als auch brillenbügelseitig verwendet werden.

Das erfindungsgemäße Scharnier 20 sieht Arretiermittel vor, die eine Arretierung des Brillenbügels 10 in der Gebrauchsstellung (wie in Abbildung (a) gezeigt) einerseits und in der zusammengeklappten Stellung (wenn die Brille nicht gebraucht wird) andererseits sicher gewährleisten. Diese Arretierung wird nachfolgend näher beschrieben.

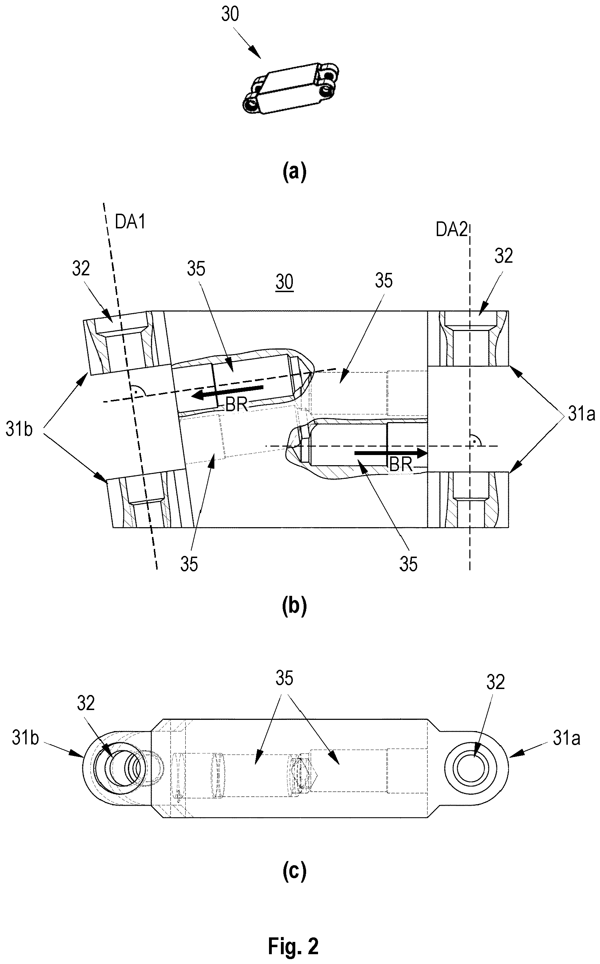

**Fig. 2** zeigt eine Ausgestaltung eines Scharniergehäuses 30 eines erfindungsgemäßen Brillenscharniers, wobei in Abbildung (a) eine perspektivische Ansicht des Scharniergehäuses 30, in Abbildung (b) eine Seitenansicht des Scharniergehäuses mit mehreren Ausbrüchen, und in Abbildung (c) eine Draufsicht des Scharniergehäuses 30 gezeigt sind.

Das Scharniergehäuse 30 weist an beiden Stirnseiten jeweils eine Scharniergabel 31a bzw. 31b auf, in die jeweils ein Scharniersteg der Gelenkteile 40a, 40b in Eingriff bringbar ist. Die Scharniergabeln weisen jeweils ein durchgehendes Bohrloch 32 auf, durch das Befestigungsmittel 41a, 41b hindurchgeschoben werden können zum Befestigen des jeweiligen Gelenkteils an dem Scharniergehäuse. In den Bohrlöchern 32 aufgenommene Befestigungsmittel 41a, 41b sind in Fig. 1 gezeigt.

Die Befestigungsmittel 41a, 41b bilden hierbei jeweils eine Schwenkachse DA1 bzw. DA2, um die das jeweilige Gelenkteil 40a, 40b relativ zum Scharniergehäuse 30 geschwenkt werden kann.

Die beiden Bohrlöcher 32 verlaufen bei der in Fig. 2 gezeigten Ausgestaltung nicht parallel zueinander, sondern in einem bestimmten Winkel zueinander. Dadurch kann beispielsweise an der Schwenkachse DA1 das brillenrahmenseitige Gelenkteil 40b angeordnet werden, sodass der Brillenbügel 10 in diesem bestimmten Winkel relativ zum Brillenrahmen geneigt ist.

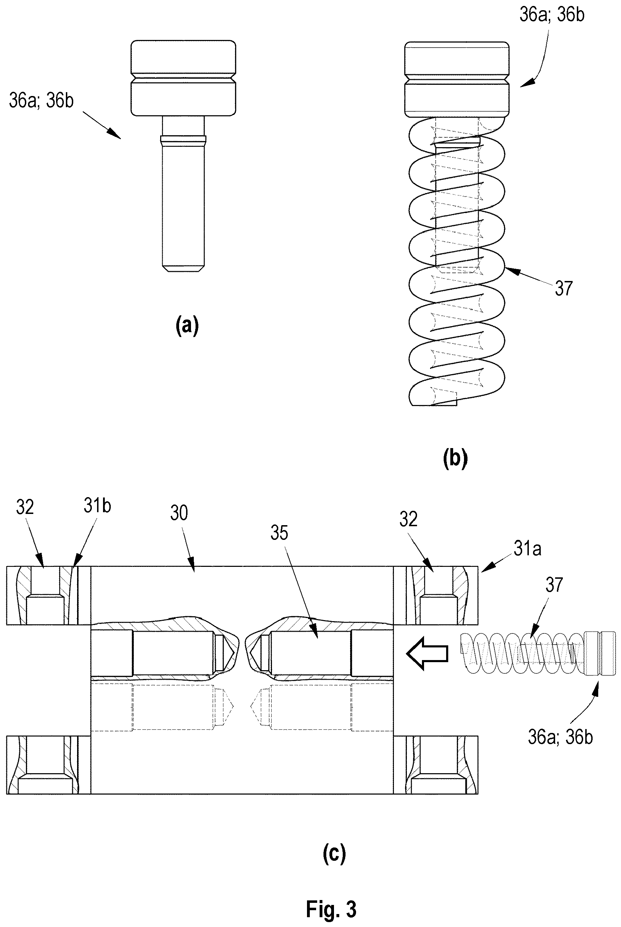

Eine alternative Ausgestaltung, bei der die beiden Bohrlöcher 32 parallel zueinander verlaufen, ist in Fig. 3, Abbildung (c) gezeigt.

In dem Scharniergehäuses 30 sind hier vier Sacklöcher 35 vorgesehen, die zur Aufnahme jeweils eines Arretiermittels dienen. Die Sacklöcher bzw. Sackbohrungen 35 haben ihre Öffnung jeweils im stirnseitigen Bereich des Scharniergehäuses zwischen den beiden Scharniergabeln 31a, 31b, wobei hier zwei Sacklöcher der Scharniergabel 31a und zwei Sacklöcher der Scharniergabel 31b zugeordnet sind.

In einer Ausgestaltung der Erfindung können auch nur zwei Sacklöcher (jeder Scharniergabel 32 des Scharniergehäuses 30 ist dann ein Sackloch 35 zugeordnet) vorgesehen sein. Das heißt, dass in dem Scharniergehäuse 30 zwei Arretiermittel angeordnet sind, wobei das eine Arretiermittel gegen das eine Gelenkteil und das andere Arretiermittel gegen das andere Gelenkteil drückt.

Die Längsachsen der Sacklöcher 35 verlaufen jeweils im Wesentlichen senkrecht zur jeweiligen Schwenkachse DA1, DA2. Dadurch kann gewährleistet werden, dass die in den Sacklöchern 35 angeordneten Arretiermittel senkrecht zur jeweiligen Schwenkachse DA1, DA2 und damit senkrecht zum jeweiligen Gelenkteil 40a, 40b bewegt werden. Die Bewegungsrichtung BR der Arretiermittel ist in Fig. 2 durch jeweils einen Pfeil BR angegeben.

Wenn die Sacklöcher 35 jeweils im Wesentlichen senkrecht zur jeweiligen Schwenkachse DA1, DA2 angeordnet sind und die Schwenkachsen nicht parallel zueinander verlaufen, dann verlaufen auch die Längsachsen der Sacklöcher nicht parallel zueinander, sondern sind in einem bestimmten Winkel zueinander angeordnet, wie beispielsweis in Abbildung (b) der Fig. 2 gezeigt. Abbildung (c) der Fig. 3 zeigt hingegen Sacklöcher, deren Längsachsen in Wesentlichen parallel zueinander verlaufen.

Wie in Abbildung (c) der Fig. 2 ersichtlich ist, können die den Scharniergabeln 31a zugeordneten Sacklöcher versetzt zu den den Scharniergabeln 31b zugeordneten Sacklöchern angeordnet sein. Das ist allerdings lediglich optional. Ob ein solcher Versatz notwendig ist, kann von der konkreten Ausgestaltung der von den Scharniergabeln aufgenommenen Gelenkteile abhängen.

**Fig. 3** zeigt eine alternative Ausgestaltung eines Scharniergehäuses 30 eines erfindungsgemäßen Brillenscharniers in einer Seitenansicht mit mehreren Ausbrüchen (Abbildung (c)) und ein Arretiermittel 36a, 36b (Abbildung (a)) mit einem dem Arretiermittel zugeordneten Federelement 37 (Abbildung (b)).

Abbildung (c) der Fig. 3 zeigt ein Scharniergehäuse 30 mit einem relativ zum Scharniergehäuse 30 angeordneten Arretiermittel 36a, 36b. Das Arretiermittel 36a, 36b und das Scharniergehäuse 30 sind hier im nicht-montierten Zustand gezeigt. Zur Montage wird das Arretiermittel entlang des in Fig. 3 (c) gezeigten Pfeiles in das Sackloch 35 eingebracht. Anschließend wird das Gelenkteil in die Scharniergabel 31a eingebracht und mit einer Befestigungsschraube 41a befestigt. Das Arretiermittel kann dann nicht mehr aus dem Sackloch 35 entnommen werden.

Das Arretiermittel 36a, 36b ist hier als rotationssymmetrischer Körper (z.B. Bolzen oder Kolben) ausgestaltet, der entlang seiner Längsachse beweglich in dem Sackloch 35 anordenbar ist.

Dem Arretiermittel ist ein Federelement 37 zugeordnet, das derart ausgestaltet ist und derart relativ zum Arretiermittel in dem Sackloch 35 angeordnet ist, dass das Arretiermittel von dem Federelement mit einer Federkraft beaufschlagt wird. Die Federkraft und die Richtung, in der die Federkraft wirkt, sind so gewählt, dass das Arretiermittel (etwa ein Bolzen) aus dem Sackloch 35 heraus und gegen das Gelenkteil, das in der Scharniergabel aufgenommen ist, gedrückt wird. Die Kraft, mit der das Arretiermittel gegen das Gelenkteil gedrückt wird, bewirkt ein Arretieren des Gelenkteils an dem Scharniergehäuse.

In der in Fig. 3 gezeigten Ausgestaltung ist das Federelement 37 als Druckfeder, hier konkret als Schraubendruckfeder ausgestaltet. Es können aber auch andere Federtype verwendet werden, etwa Tellerfedern.

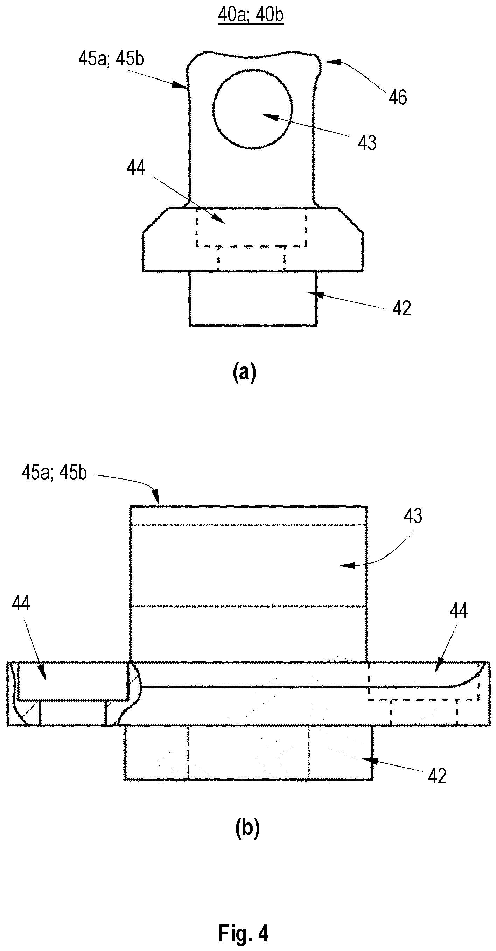

**Fig. 4** zeigt ein Gelenkteil 40a, 40b (zweites bzw. drittes Scharnierelement) eines erfindungsgemäßen Brillenscharniers in einer Ansicht von oben (Abbildung (a)) und einer Seitenansicht mit einem Ausbruch (Abbildung (b)).

Das Gelenkteil weist einen Befestigungsabschnitt 42 auf, der hier derart ausgestaltet ist, dass er in eine Aussparung am Brillenrahmen bzw. am Brillenbügel aufgenommen werden kann. An einem randseitigen Überstand des Befestigungsabschnittes 42 sind Bohrlöcher 44 zur Aufnahme von Befestigungsschrauben vorgesehen, mit denen das Gelenkteil an dem Brillenrahmen bzw. am Brillenbügel befestigt wird. Alternativ kann das Gelenkteil bzw. der Befestigungsabschnitt 42 auch in der Aussparung am Brillenrahmen bzw. am Brillenbügel verklebt werden - in diesem Fall kann auf die Bohrlöcher 44 auch verzichtet werden. In einer weiteren Alternative kann es auch vorgesehen sein, das Gelenkteil mittels einer Presspassung oder mittels Verschweißen am Brillenrahmen bzw. am Brillenbügel zu befestigen.

In einer weiteren alternativen Ausgestaltung der Erfindung kann der Befestigungsabschnitt 42 ein Außengewinde aufweisen, sodass das Gelenkteil durch Verschrauben mit dem Brillenrahmen bzw. mit dem Brillenbügel an dem Brillenrahmen bzw. an dem Brillenbügel befestigt werden kann. Der Brillenrahmen bzw. der Brillenbügel weist hierbei ein Bohrloch mit einem zum Außengewinde korrespondierendem Innengewinde auf.

Das Gelenkteil weist ferner einen Scharniersteg 45a, 45b auf, der angepasst ist, in die Scharniergabel des Scharniergehäuses aufgenommen zu werden. Der Scharniersteg weist ein Bohrloch bzw. ein Durchgangsloch 43 auf, das, wenn der Scharniersteg in die Scharniergabel des Scharniergehäuses aufgenommen ist, koaxial zum Bohrloch 32 der Scharniergabel verläuft. Das von dem Bohrloch 32 aufgenommene Befestigungsmittel 41a, 41b wird durch das Durchgangsloch 43 geschoben, sodass das Gelenkteil schwenkbar an dem Scharniergehäuse angelenkt ist. Das Befestigungsmittel 41a, 41b bildet dann die Schwenkachse.

Am freien Ende des Scharnierstegs 45a, 45b kann ein randseitiger Vorsprung 46 vorgesehen sein, der in etwa wulstartig ausgestaltet ist und der parallel zum Durchgangsloch 43 verläuft. Dieser randseitige Vorsprung 46 kann an beiden Seiten des Scharnierstegs vorgesehen sein. Der randseitige Vorsprung 46 bewirkt, dass eine sichere Arretierung des Gelenkteils an dem Scharniergehäuse in einer vorbestimmten Stellung des Gelenkteils relativ zum Scharniergehäuse gewährleistet ist.

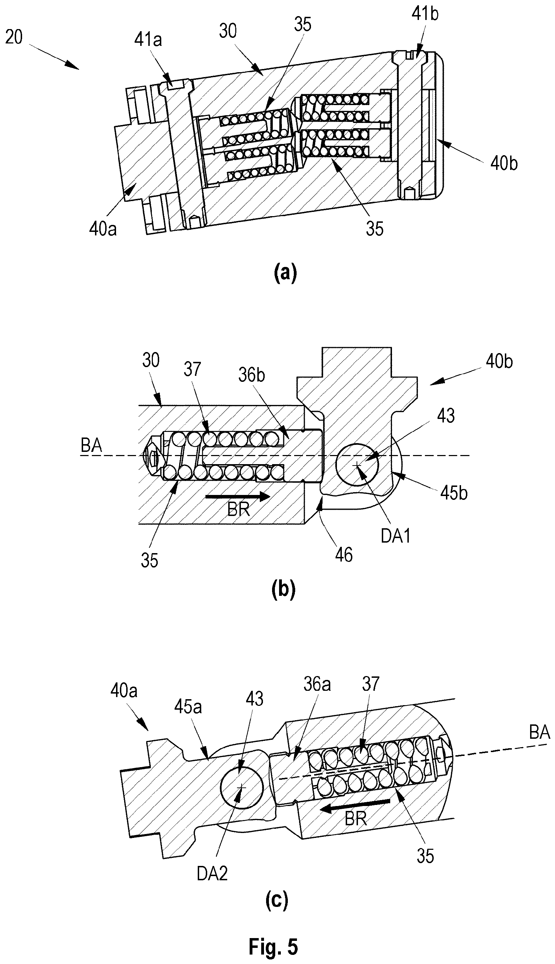

Eine solche Stellung des Gelenkteils relativ zum Scharniergehäuse ist beispielsweise in Fig. 5, Abbildung (b) gezeigt. Dort bewirkt der randseitige Vorsprung 46, dass eine gewisse Kraft aufgewandt werden muss, um das Gelenkteil 40b um die Schwenkachse DA1 von der dort gezeigten Stellung herausschwenken zu können.

**Fig. 5** zeigt in Abbildung (a) das in Fig. 2 gezeigte Scharniergehäuse (erstes Scharnierelement) mit daran angelenkten Gelenkteilen (zweites und drittes Scharnierelement) in einem Längsschnitt, und in den Abbildungen (b) und (c) jeweils einen Querschnitt eines Teils des Scharniergehäuses mit einem daran angelenkten Gelenkteil.

Abbildung (a) zeigt das in Fig. 2 gezeigte Scharniergehäuse 30, wobei hier auch die an das Scharniergehäuse 30 angelenkten Gelenkteile 40a und 40b sowie die in den Sacklöchern 35 aufgenommenen Arretiermittel gezeigt sind. Die Gelenkteile sind jeweils mittels Befestigungsschrauben 41a, 41b an dem Scharniergehäuse 30 befestigt.

Abbildung (b) zeigt einen Querschnitt des rechten Teils des in Abbildung (a) gezeigten Scharniergehäuses 30. Das Gelenkteil 40b steht hier im Wesentlichen in einem rechten Winkel zum Scharniergehäuse 30. Das Arretiermittel 36b wird von dem Federelement 37 aus dem Sackloch 35 heraus (entlang der Bewegungsachse BA und in Bewegungsrichtung BR) und seitlich gegen den Scharniersteg 45b des Gelenkteils 40b gedrückt. Da der seitliche Abschnitt des Scharnierstegs 45b und die Stirnseite des Arretiermittels 36b im Wesentlichen flach ausgebildet sind, wird so eine verlässliche Arretierung gewährleistet.

Der randseitig verlaufende Vorsprung 46 am Scharniersteg 45b hat den Zweck, dass eine gewisse Kraft aufgewandt werden muss, um das Arretiermittel 36b aus der in Abbildung (b) gezeigten Stellung herausschwenken zu können.

Abbildung (c) zeigt einen Querschnitt des linken Teils des in Abbildung (a) gezeigten Scharniergehäuses 30. Das Gelenkteil 40a steht hier im Wesentlichen senkrecht zur Stirnseite des Scharniergehäuses 30. Die Funktion des Gelenkteils 40a und des Arretiermittels 36a entsprechen im Wesentlichen der Funktion wie mit Bezug auf Abbildung (b) erläutert.

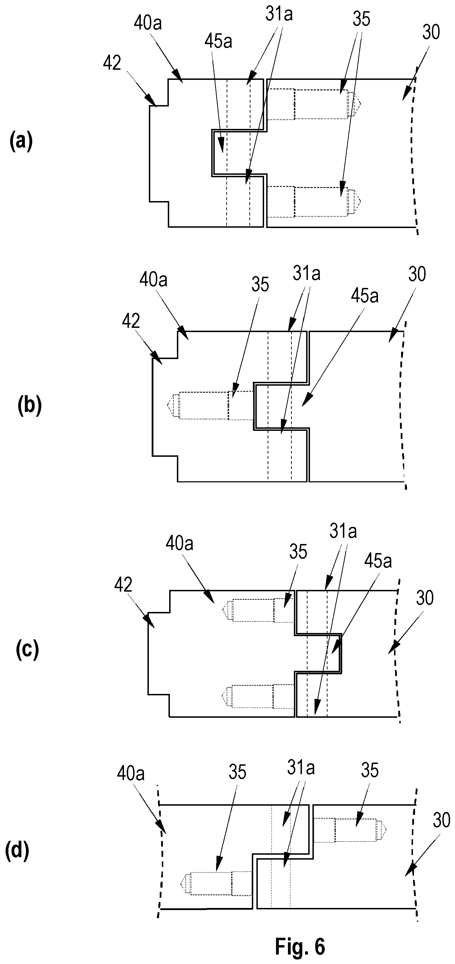

**Fig. 6** zeigt in den Abbildungen (a), (b), (c) und (d) vier alternative Ausgestaltungen eines Brillenscharniers, wobei es sich bei den Ausgestaltungen gemäß den Abbildungen (b) und (c) um nicht erfindungsgemäße Ausgestaltungen handelt.

Im Unterschied zu dem vorstehend beschriebenen Brillenscharnier weist das Scharniergehäuse 30 gemäß den Abbildungen (a) und (b) einen Scharniersteg 45a auf, während das Gelenkteil 40a eine dazu korrespondierende Scharniergabel 31a aufweist.

Gemäß Abbildung (a) sind die (hier nicht gezeigten) Arretiermittel erfindungsgemäß in Sacklöchern 35 des Scharniergehäuses 30 angeordnet, wobei die Sacklöcher so in dem Scharniergehäuse vorgesehen sind, dass die Arretiermittel auf die Scharniergabel 31a wirken. Es kann auch vorgesehen sein, nur eines der beiden hier gezeigten Sacklöcher 35 vorzusehen.

In einer nicht erfindungsgemäß Ausgestaltung und wie in Abbildung (b) gezeigt, können die (hier nicht gezeigten) Arretiermittel auch in Sacklöchern 35 des Gelenkteils 40a angeordnet sein, wobei hier lediglich ein Sackloch gezeigt ist. Es können auch zwei oder mehrere Sacklöcher vorgesehen sein. Das hier gezeigte Sackloch ist so in dem Gelenkteil 40a vorgesehen, dass das Arretiermittel auf den Scharniersteg 45a des Scharniergehäuses 30 wirkt.

In einer nicht erfindungsgemäß Ausgestaltung und gemäß Abbildung (c) weist das Scharniergehäuse 30 eine Scharniergabel 31a auf, während das Gelenkteil 40a einen dazu korrespondierenden Scharniersteg 45a aufweist. Scharniergehäuse und Gelenkteil weisen also im Wesentlichen die gleiche Form auf, wie in Fig. 1 bis Fig. 5 gezeigt. Im Unterscheid zu dem in Fig. 1 bis Fig. 5 gezeigten Brillenscharnier sind die Arretiermittel hier in Sacklöchern 35 des Gelenkteils 40a angeordnet, wobei die Sacklöcher jeweils so angeordnet sind, dass das eine Arretiermittel gegen das eine Teil der Scharniergabel und das andere Arretiermittel gegen das andere Teil der Scharniergabel wirkt. Alternativ hierzu ist es auch möglich, nur ein Sackloch mit einem entsprechenden Arretiermittel vorzusehen.

Abbildung (d) zeigt ein Scharniergehäuse 30 und ein daran angelenktes Gelenkteil 40a eines erfindungsgemäßen Scharniers. In dem Scharniergehäuse 30 und in dem Gelenkteil 40a sind ist jeweils ein Sackloch 35 vorgesehen zur Aufnahme eines Arretiermittels. Es kann auch nur eines der beiden hier gezeigten Sacklöcher vorgesehen sein.

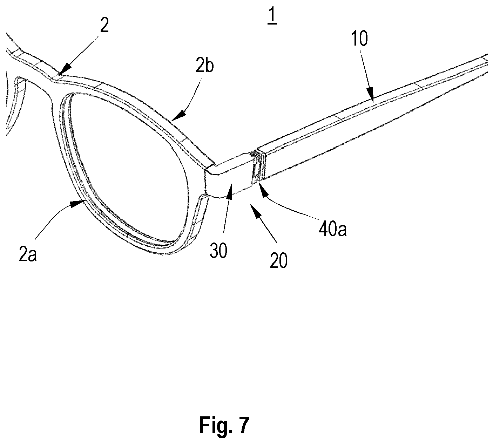

**Fig. 7** zeigt die in Fig. 1 gezeigt Brille mit einer alternativen Ausgestaltung des Brillenscharniers 20. Das Brillenscharnier 20 weist hier ein Scharniergehäuse 30 und ein an das Scharniergehäuse 30 angelenktes Gelenkteil 40a auf. Das Gelenkteil 40a ist an dem Brillenbügel 10 befestigt, während das Scharniergehäuse 30 an dem Brillenrahmen 2 befestigt ist. Gezeigt ist hier also ein nicht erfindungsgemäßes zweiteiliges Brillenscharnier. Die Funktionsweise entspricht dem vorstehend beschriebenen dreiteiligen Brillenscharnier. Der Unterschied zum dreiteiligen Brillenscharnier liegt lediglich darin, dass der Brillenbügel nicht um bis zu 360° relativ zum Brillenrahmen geschwenkt werden kann.

### Bezugszeichen

- 1: Brille
- 2: Brillenrahmen (Fassung) der Brille 1
- 2a: erste Oberfläche bzw. erste Seite des Brillenrahmens 2
- 2b: zweite Oberfläche bzw. zweite Seite des Brillenrahmens 2
- 10: Brillenbügel
- 20: Brillenscharnier
- 30: Scharniergehäuse (erstes Scharnierelement)
- 31a, 31b: Scharniergabel
- 32: Bohrlöcher in der Scharniergabel 31a, 31b zur Aufnahme / zum Hindurchführen der Befestigungsmittel 41a, 41b
- 35: Sacklöcher zur Aufnahme der Arretiermittel bzw. Kolben 36a, 36b
- 36a: erster Kolben (Arretiermittel)
- 36b: zweiter Kolben (Arretiermittel)
- 37: Federelement (Druckfeder) der Kolben 36a, 36b
- 40a: Gelenkteil (zweites Scharnierelement)
- 40b: Gelenkteil (drittes Scharnierelement)
- 41a, 41b: Befestigungsmittel (Schrauben)
- 42: Befestigungsabschnitt eines Gelenkteils 40a, 40b
- 43: Bohrloch im Gelenkteil 40a, 40b zur Aufnahme / zum Hindurchführen der Befestigungsmittel 41a, 41b
- 44: Bohrlöcher im Gelenkteil zur Aufnahme von Befestigungsschrauben
- 45a, 45b: Scharniersteg
- 46: wulstartiger Vorsprung
- BA: Bewegungsachse
- BR: Bewegungsrichtung
- DA1, DA2: Schwenkachsen

## Patentansprüche

1. Brillenscharnier (20) zum schwenkbaren Befestigen eines Brillenbügels (10) an einem Brillenrahmen (2) einer Brille (1), wobei das Brillenscharnier (20)
- ein erstes Scharnierelement (30),
- ein zweites Scharnierelement (40a), und
- ein drittes Scharnierelement (40b)
umfasst, wobei
- das erste Scharnierelement (30) schwenkbar an dem zweiten Scharnierelement (40a) angelenkt ist,
- das erste Scharnierelement (30) zumindest ein erstes federndes oder federnd gelagertes Arretiermittel (36a) aufweist, wobei das erste Arretiermittel (36a) entlang einer Bewegungsachse (BA) beweglich in dem ersten Scharnierelement (30) angeordnet ist,
- das erste Arretiermittel (36a) durch eine Federkraft in einer Bewegungsrichtung (BR) entlang der Bewegungsachse (BA) gegen das zweite Scharnierelement (40a) gedrückt wird,
- das dritte Scharnierelement (40b) schwenkbar an dem ersten Scharnierelement (30) angelenkt ist,
- das erste Scharnierelement (30) zumindest ein zweites federndes oder federnd gelagertes Arretiermittel (36b) aufweist, wobei das zweite Arretiermittel (36b) entlang einer Bewegungsachse (BA) beweglich in dem ersten Scharnierelement (30) angeordnet ist,
- das zweite Arretiermittel (36b) durch eine Federkraft in einer Bewegungsrichtung (BR) entlang der Bewegungsachse (BA) gegen das dritte Scharnierelement (40b) gedrückt wird, und
- das zumindest eine erste Arretiermittel (36a) und das zumindest eine zweite Arretiermittel (36b) jeweils in einer Sackbohrung (35) am ersten Scharnierelement (30) angeordnet sind.

2. Brillenscharnier nach dem vorhergehenden Anspruch, wobei jedes Scharnierelement relativ zu dem jeweils angelenkten Scharnierelement um einen Bereich von mindestens 160°, vorzugsweise mindestens 180° schwenkbar ist.

3. Brillenscharnier nach einem der vorhergehenden Ansprüche, wobei das zumindest eine erste Arretiermittel (36a) und das zumindest eine zweite Arretiermittel (36b) jeweils einen Kolben (36a, 36b) und ein mit dem jeweiligen Kolben zusammenwirkendes Federelement (37) umfassen, wobei das Federelement (37) vorzugsweise eine Druckfeder, besonders bevorzugt eine Schraubendruckfeder umfasst, und wobei das Federelement angepasst ist den jeweiligen Kolben (36a, 36b) aus der jeweiligen Sackbohrung (35) in der Bewegungsrichtung (BR) entlang der Bewegungsachse (BA) herauszudrücken.

4. Brillenscharnier nach dem vorhergehenden Anspruch, wobei das Federelement des zumindest einen ersten Arretiermittels (36a) eine andere Federkraft aufweist als das Federelement des zumindest einen zweiten Arretiermittels (36b).

5. Brillenscharnier nach einem der vorhergehenden Ansprüche, wobei jeweils zwei Scharnierelemente über eine Scharniergabel-Scharniersteg-Verbindung schwenkbar zueinander angelenkt sind, wobei eines der beiden Scharnierelemente eine Scharniergabel (31a; 31b) und das andere der beiden Scharnierelemente einen Scharniersteg (45a; 45b) aufweisen.

6. Brillenscharnier nach einem der vorhergehenden Ansprüche, wobei das zweite Scharnierelement (40a) mit einem Brillenbügel (10) und das dritte Scharnierelement (40b) mit einem Brillenrahmen (2) koppelbar sind.

7. Brillenscharnier nach einem der Ansprüche 1 bis 5, wobei das zweite Scharnierelement (40a) einteilig mit dem Brillenbügel (10) und/oder das dritte Scharnierelement (40b) einteilig mit dem Brillenrahmen (2) ausgestaltet ist.

8. Brillenscharnier nach einem der vorhergehenden Ansprüche, wobei die Sackbohrung (35), in dem das zumindest eine erste Arretiermittel (36a) angeordnet ist, und die Sackbohrung (35), in dem das zumindest eine zweite Arretiermittel (36b) angeordnet ist, in einem vorbestimmten Winkel zueinander in dem ersten Scharnierelement (30) verlaufen.

9. Brille (1), aufweisend einen Brillenrahmen (2), zwei Brillenbügel (10) und zwei Brillenscharniere (20) nach einem der vorhergehenden Ansprüche, wobei jeweils ein Brillenbügel (10) über ein Brillenscharnier (20) schwenkbar an dem Brillenrahmen (2) angeordnet ist.

10. Brille nach dem vorhergehenden Anspruch, wobei jeder Brillenbügel (10) über das jeweilige Brillenscharnier (20) über einen Bereich von 360° relativ zum Brillenrahmen (2) schwenkbar ist.
